# EUROPEAN PATENT APPLICATION

(11) **EP 1 271 451 A2**
(43) Date of publication of application: **02.01.2003**
(21) Application number: 02013886.3
(22) Date of filing: 20.06.2002
(51) Int. Cl.: G09B 15/00

(54) **Method and system for learning to play a musical instrument**

(30) Priority: 20.06.2001 US 885652 P
(71) Applicant: Shahal, Elihai, Yavne 81573 Israel (IL)
(72) Inventor: Shahal, Elihai, Yavne 81573 Israel (IL)
(74) Representative: Copsey, Timothy Graham

(57) **Abstract**

A system and method for learning playing of a musical instrument without a human teacher, the system including a series of lessons stored in a computer program, each lesson being programmed to include automatic dynamic playing of at least one learning passage by a computer; and a period of silence of a predefined length relative to the learning passage, for playing of the learning passage by a student on a musical instrument. There is also provided a system and method of teaching music composition including activating, by means of a button, at least one composition command in a computer to compose a song.

## Description

### FIELD OF THE INVENTION

The present invention relates to a method and system for learning to play a musical instrument.

### BACKGROUND OF THE INVENTION

Traditionally, piano and other music lessons are taught in a one on one setting, with a single teacher for each pupil or in a group setting, with one teacher for a group of students. In any event, the pupil generally is taught a basic skill, and then must practice at home until the next lesson, not always knowing if the notes played are correct.

In recent years, a number of computer programs for teaching playing of keyboard instruments have been developed. These generally include a keyboard which is plugged into the computer in order to provide feedback to the student. These programs generally consist of a plurality of blocks of music recorded and stored in a computerized database which a student must play. The computer compares digital signals of the recorded block with those of the block played by the student and indicates any errors. One such program is known as Teach Me Piano, by Voyetra. Since each player plays music slightly differently, often these programs indicate that an error has been made which a human keyboard instructor would merely regard as a matter of interpretation.

There are also known programs for professional composition of music. These programs generally include drag and drop of various notes, and other musical elements, onto a staff, as known in word processing programs. Correction requires the use of an eraser to remove undesired notes. These programs are only suitable for professional composers, and do not have any playback feature.

Accordingly, there is a long felt need for a simple, user friendly program for teaching playing of a musical instrument, as well as a simple program for composing music in which the computer can play the composed work.

### SUMMARY OF THE INVENTION

According to the present invention, there is provided a system for learning playing of a musical instrument without a human teacher, the system including a series of lessons stored in a computer program, each lesson being programmed to include automatic dynamic playing of at least one learning passage by a computer; and a period of silence of a predefined length relative to the learning passage, for playing of the learning passage by a student on a musical instrument.

According to a preferred embodiment of the system, each lesson includes a plurality of parameters, and the system includes means for selectively changing each of the parameters by the student.

According to another preferred embodiment of the invention, the system also includes a composition portion arranged for inputting composition commands to compose a song to be played in the playing portion for playing back in the pause portion.

Further according to the present invention, there is provided a method for learning playing of a musical instrument without a human teacher, the method including causing a computer to dynamically play at least one learning passage; and causing the computer to stop playing, for a predefined length of time relative to the learning passage, for playing of the learning passage by a student on the musical instrument.

According to a preferred embodiment, each learning passage includes a plurality of graphical notes and associated audio tones, and the step of dynamically playing includes causing the computer to retrieve the plurality of notes and associated tones, one after another, and play the tones in a predetermined order while displaying a graphical representation of the learning passage on a computer screen.

According to one embodiment of the invention, the method further includes providing seven buttons on a computer display, each button representing a different basic note, providing means for selecting at least one of the buttons by the student; and causing the computer to display the note represented by the selected button on a staff, so as to compose a song.

According to a preferred embodiment, the step of playing includes storing single notes and causing the computer to play individually said single notes when playing each song, thereby providing dynamic performance wherein each song can be changed or added to.

There is also provided a method of teaching music composition including activating, by means of a button, at least one composition command in a computer to compose a song.

According to a preferred embodiment, the method includes providing seven buttons on a computer display, each button representing a different basic note, providing means for selecting at least one of the buttons by the student; and causing the computer to display the note represented by the selected button on a staff, so as to compose a song.

According to one embodiment, the method of teaching music composition further includes automatically placing bar lines at the end of measures.

### BRIEF DESCRIPTION OF THE DRAWINGS

The present invention will be further understood and appreciated from the following detailed description taken in conjunction with the drawings in which:
Fig. 1 is an example of a main menu for a teaching program, according to one embodiment of the present invention;
Fig. 2 is a flow chart of a computer program indicating schematically the operations of the main menu, according to one embodiment of the present invention;
Fig. 3a is an example of a theory lesson according to one embodiment of the present invention;
Fig. 3b is a flow chart of a computer program indicating schematically the steps in a theory lesson, according to one embodiment of the present invention;
Fig. 4 is an example of a lesson for right hand on an electric organ, according to one embodiment of the present invention;
Fig. 5 is a flow chart of a computer program indicating schematically the steps in the lesson according to Fig. 4;
Fig. 6 is an example of a lesson for left hand on an electric organ, according to one embodiment of the present invention;
Fig. 7 is a flow chart of a computer program indicating schematically the steps performed by a computer in the lesson according to Fig. 6;
Fig. 8 is an example of a list box of songs, according to one embodiment of the present invention;
Fig. 9 is a flow chart of a computer program indicating schematically the operation of the songs menu, according to one embodiment of the invention;
Fig. 10 is an example of a song playing screen, according to one embodiment of the present invention;
Fig. 11 is a flow chart indicating schematically the steps in playing a selected song, according to one embodiment of the invention;
Fig. 12 is an example of a song composition screen, according to one embodiment of the present invention;
Fig. 13 is a flow chart indicating schematically the steps in song composition, according to one embodiment of the invention;
Fig. 14 is an example of a song composition screen with part of a song composed thereon;
Fig. 15 is a schematic illustration of a remote control system for communicating during a practice session;
Fig. 16 is an example of a practice screen with highlighting, according to one embodiment of the present invention;
Fig. 17 is an example of a practice screen with highlighting, according to another embodiment of the present invention;
Fig. 18 is an example of a practice screen with highlighting, according to yet another embodiment of the present invention;
Fig. 19 is a flow chart indicating schematically the steps in highlighting during a practice session, according to one embodiment of the invention;
Fig. 20 is a flow chart indicating schematically the steps involved in the operation of highlighting on the screen, according to one embodiment of the invention;
Fig. 21 is a flow chart indicating schematically the steps relating to highlighting in case of Re-do, according to one embodiment of the invention; and Fig. 22 is a flow chart indicating schematically the steps relating to highlighting in case of Undo, according to one embodiment of the invention.

### DETAILED DESCRIPTION OF THE INVENTION

The present invention relates to a learn-by-yourself method of teaching playing a musical instrument using a computerized instruction program. The program includes a series of lessons, which may be of gradually increasing difficulty or complexity, which are used by the student during a lesson and for practicing the newly learned material. It is a particular feature of the present invention that the instrument on which the student plays need not be coupled to the computer. Rather, the computer automatically plays selected portions, or learning passages, of a song, which can include a bar, several bars, a musical sentence,a period,or the entire song, one after the other, and the student plays each portion of the song on his or her instrument during the period of silence between playing subsequent passages. The length of the silence is related to the length of the selected portion, and can be adjusted by the student during practice sessions. In this way, the student also develops his or her musical ear, as the student listens to the music as played by the computer and compares it with the music when he or she plays, both the tones themselves, and the rhythm.

It is a particular feature of the invention that all operations are carried out in response to user selections input to the computer by the student by pressing a "button" on the computer screen, such as by clicking with a mouse on a desired operation or option button, touching that button on a touch screen, pressing a corresponding key on the computer keyboard or remote controller, or in any other suitable fashion. Similarly, the system includes a music composition program which also operates at the click of a mouse, touch on a touch screen, etc. All that is required is that the student indicate the desired option, and the computer automatically carries out the required operation, whether it be changing the tempo of a lesson, or adding a note to a staff.

The method of learning includes several stages. The first is music theory, which introduces the student to the various musical elements, including the staff, the notes and their lengths (number of beats), the treble clef, rests, particularly quarter rest, and time signature. Other musical elements, such as key signature, sharps and flats may optionally be included, depending upon the level of instruction in the particular program.

Once the student has been introduced to the basic theory, the actual playing lessons begin. It will be appreciated that the method of the present invention is suitable for a variety of instruments, including piano, electric organ, synthesizer, clarinet, saxophone, violin, or any other instrument whose playing can be illustrated graphically and imitated by a student. For purposes of the present application, by way of example only, the method will be illustrated using an electric organ.

The teaching program generally consists of a series of lessons for teaching playing with the right hand, a series of lessons for teaching playing with the left hand and/or chords, depending upon the instrument, and a collection of songs arranged by level of difficulty and requiring a gradually increasing level of skill, on which the student can practice his or her newly acquired skills. "Pressing" a play button causes the computer to play a selected portion of the lesson and to pause while the student plays the same portion himself.

It is a particular feature of the invention that each lesson includes an animated, graphic illustration of the correct finger positions on the instrument required to generate a played sound, such as Do Re Mi. The finger animation helps the student understand the correct hand position, as well as to adopt the preferred playing technique.

According to a preferred embodiment of the invention, the program also includes a beginner level music composition program, which permits a student to compose a song and provides lessons by the computer in playing the composed song, as part of the teaching program. This option is not available in any known conventional music teaching program. The program for composing music on a computer includes a plurality of "buttons" displayed on the screen, each of which, when pressed or selected, activates at least one composition command to compose a song. Thus, the student merely needs to select the button indicating the note Do, and a graphical representation of the note Do, of a default length, is automatically displayed by the computer in the correct location on a displayed staff. This note is represented by a data string, which is saved in the computer memory and can be used to play the song, print the song, or transfer the song to another student.

It is a particular feature of the invention that the computer dynamically plays the notes or tones of each lesson. This means that the computer does not merely playback pre-recorded blocks of notes, but each time a note or group of notes is played, the computer accesses each tone, individually, in the desired order, from a tones database. No conventional teaching program includes dynamic playing of music. Dynamic playing of the musical notes and composition at the touch of a button are possible in the present application due to the form in which the musical notes are stored. Each note in a song is represented by a data string. Preferably, the data string includes a data representing the name of the tone, the length of the tone, the location of the tone in the measure, the name of an associated chord (if any), whether the chord is major or minor, and whether the chord is diminished, augmented or as usual, among other possibilities. Thus, for example, the data string C13G7 could represent the note do, of 1 beat length, in the third position in the bar, with an accompanying G7 chord. This method of storing songs also permits sharing. Thus, one student can send a song he or she composed to a friend, on a disk, diskette, over the Internet, or print it out on paper.

Yet another feature of the invention is that the student can program all the parameters of a practice session. First, the student selects the length of the learning passage. A learning passage is a selected number of bars or a length of passage to be practiced together as a unit. The default learning passage is a single bar, however, the student can choose to practice two bars, a musical period, etc., as the length of passage to be practiced. In addition, the student can preferably program the tempo of the practice passages, both as played by the computer and as played by the student, the length of the silence between learning passages (preferably as a function of the length of the learning passage), number of repeats of the same portion, and so forth.

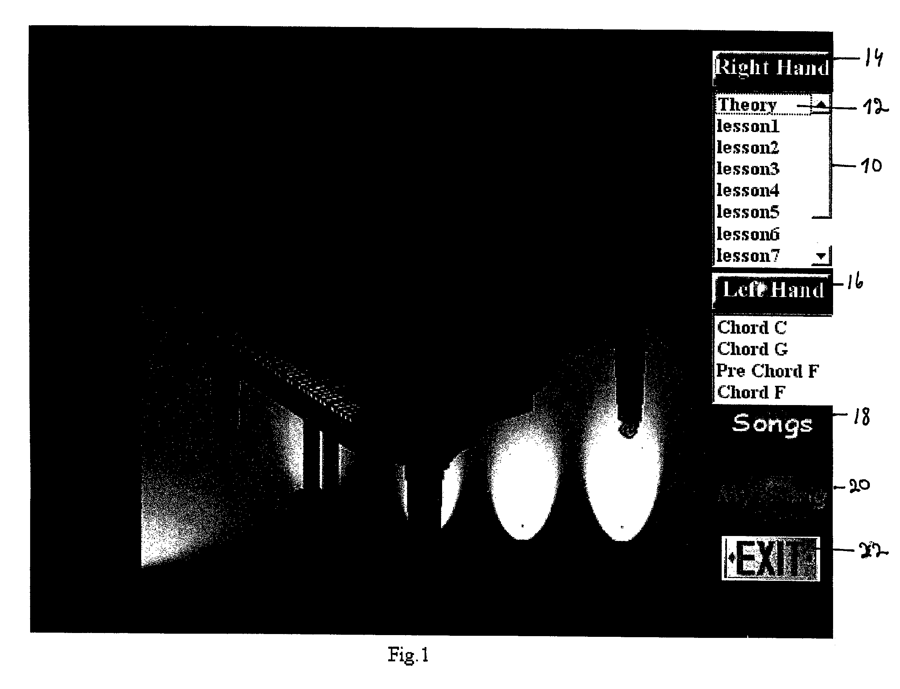

Referring now to Fig. 1, there is shown an example of a main menu 10 for a teaching program, according to one embodiment of the present invention. At the start of operation of the teaching program, the main menu appears on the computer screen. The main menu preferably includes a number of buttons, each activating a different option. In the illustrated embodiment, main menu 10 includes a button 12 for a theory lesson, a button 14 for right hand lessons, a button 16 for left hand lessons, a button 18 to display pre-recorded songs to practice, and a button 20 for displaying My Song (a song composed by the student). The main menu 10 also includes an exit button 22.

It will be appreciated that pressing any of buttons 14, 16, 18 and 20 will open a further window including a list box including each of the available options in each category.

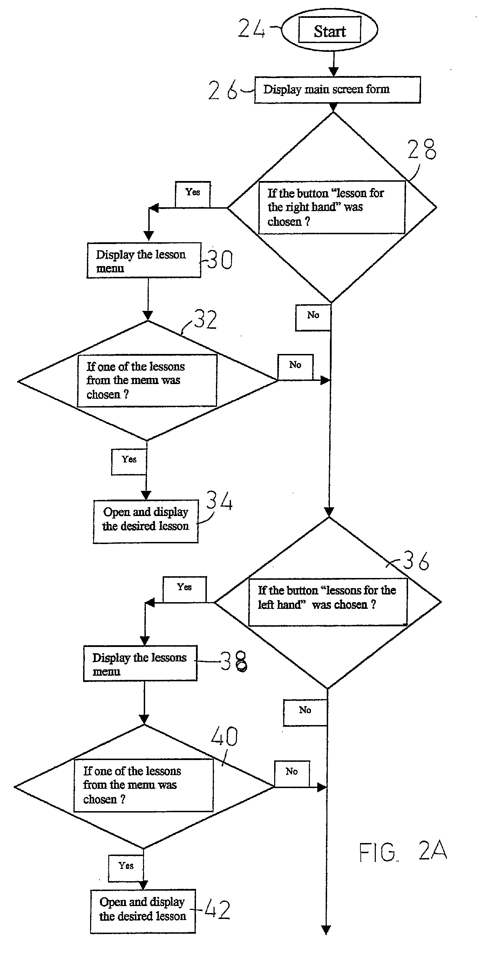

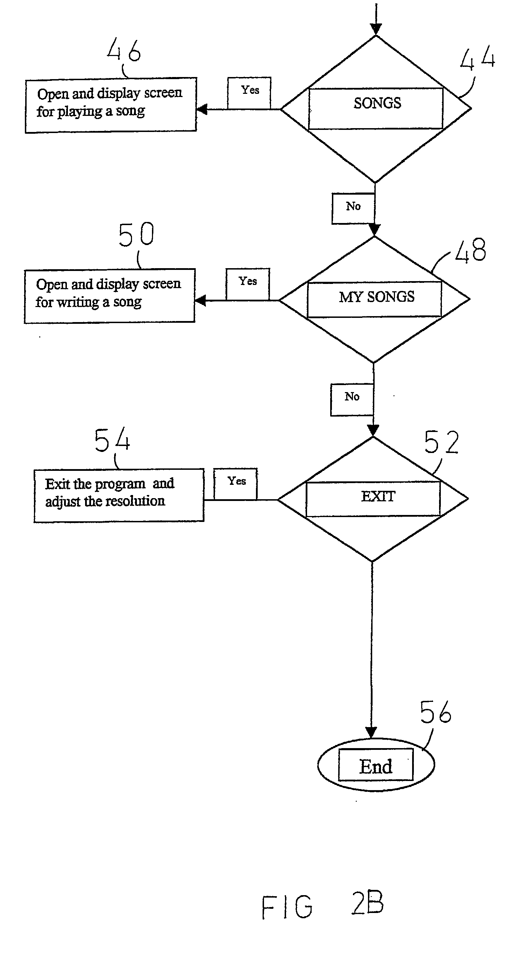

As shown in Fig. 2, a flow chart indicating schematically the operations of the main menu, according to one embodiment of the present invention, when the program is loaded (block 24), the Main Menu is displayed (block 26). If the button for right hand lessons is pressed (block 28), the menu of right hand lessons is displayed (block 30). If one of the right hand lessons is selected (block 32), the lesson is displayed and taught (block 34), as described in detail hereinbelow.

If the button for right hand lessons is not selected, or no right hand lesson is selected, then the program checks whether a left hand lesson has been selected (block 36). If so, the menu of left hand lessons is displayed (block 38). If one of the left hand lessons is selected (block 40), the lesson is displayed and taught (block 42), as described in detail hereinbelow.

If the button for left hand lessons is not selected, or no left hand lesson is selected, then the program checks whether the Songs button has been selected (block 44). If it has, the Menu for practicing a song is displayed (block 46) and the song is played by the computer and the student, as described in detail hereinbelow.

If the button for Songs has not been selected, then the program checks whether the My Song button has been selected (block 48). If it has, the Menu for composing a song is displayed (block 50) and a song can be composed or changed, as described in detail hereinbelow.

If the button for My Song has not been selected, then the program checks whether the Exit button has been selected (block 52). If it has, the Menu for composing a song is displayed (block 56) and a new or old song is composed, as described in detail hereinbelow.

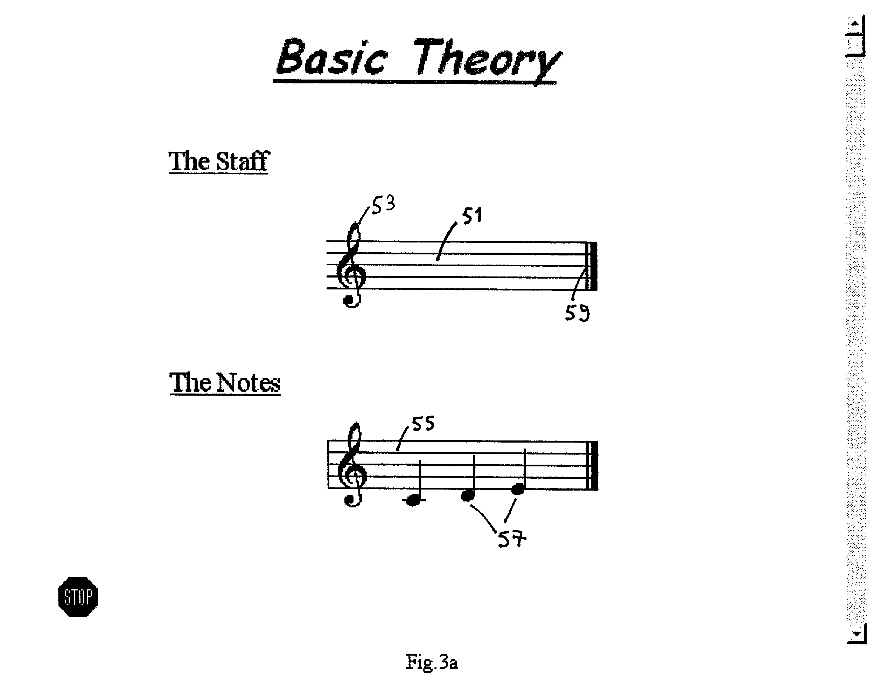

At the beginning, the student generally will press button 12 for a theory lesson. Fig. 3a is an example of a display for a theory lesson according to one embodiment of the present invention. As can be seen, this lesson includes a variety of musical elements, which can include, for example, the staff 51, treble clef 53, key signature 55, notes 57 and bar lines 59.

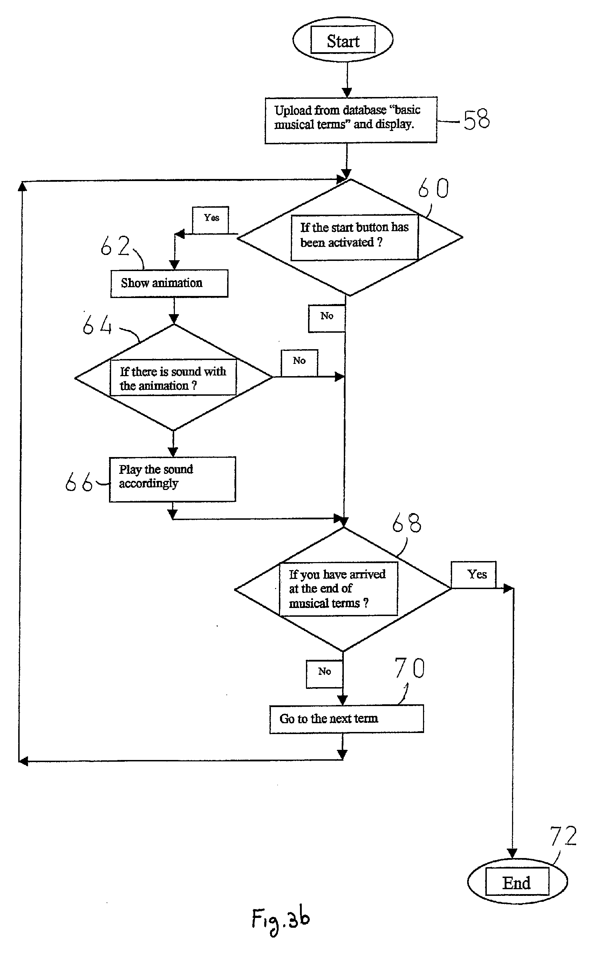

Fig. 3b is a flow chart of a computer program indicating schematically the steps in a theory lesson according to one embodiment of the present invention. According to this embodiment, the computer will upload all the basic musical elements which are stored in a database in the computer, i.e., on a hard disk or CD ROM, and display a list of these elements to the student (block 58). The program can present each musical element in a pre-selected order, or the student can select which musical element is of interest at any given time. The musical elements can include, for example, the staff, the notes and their lengths (number of beats), the treble clef, rests, particularly quarter rest, and time signature. When an element has been selected (block 60), as by clicking on it with a mouse or touching on a touch screen, the computer displays any accompanying animation (block 62). If there is an accompanying tone or explanation (block 66), the audio tone is now played. The computer now checks whether the last musical element has been checked (block 68). If not, the computer checks the next musical element on the list (block 70). If the next element has been selected (block 60), it continues as described above. When all the musical elements have been checked to determine whether they have been selected, the theory section ends (block 72) and the program again displays the main menu. Alternatively, the elements can be checked in a continuous cycle.

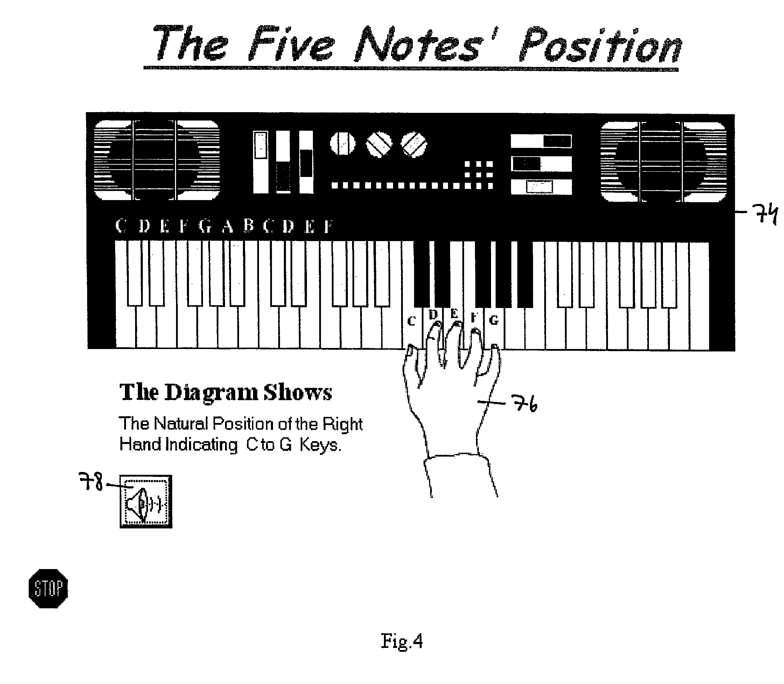

Once the student has reviewed or mastered the musical elements in theory, he or she is ready to begin playing. Generally, the student will begin with a series of lessons for the right hand. Fig. 4 is an example of a lesson for right hand, according to one embodiment of the present invention. As can be seen, the instrument 74, here shown as an electric organ, is illustrated, together with animation of a hand 76 placed in the proper location and position for playing the notes to be learned in that lesson. The illustrated lesson is the five notes position, showing the proper fingering for playing Do Re Mi Fa Sol. A click on a play button 78 will cause the fingers to press on the keys, one after another, while the appropriate tone, corresponding to the note heard when each key is pressed, is played by the computer. The student then performs the same movements with his or her own fingers on his or her own instrument, and listens to hear whether the sounds made by the instrument are the same as those played by the computer. It will be appreciated that the student can press the play button 78 as often as he or she wants to or needs to, in order to hear the desired notes and learn how to play them by practicing on his or her instrument. As each right hand lesson is mastered, the student moves to the next lesson in difficulty.

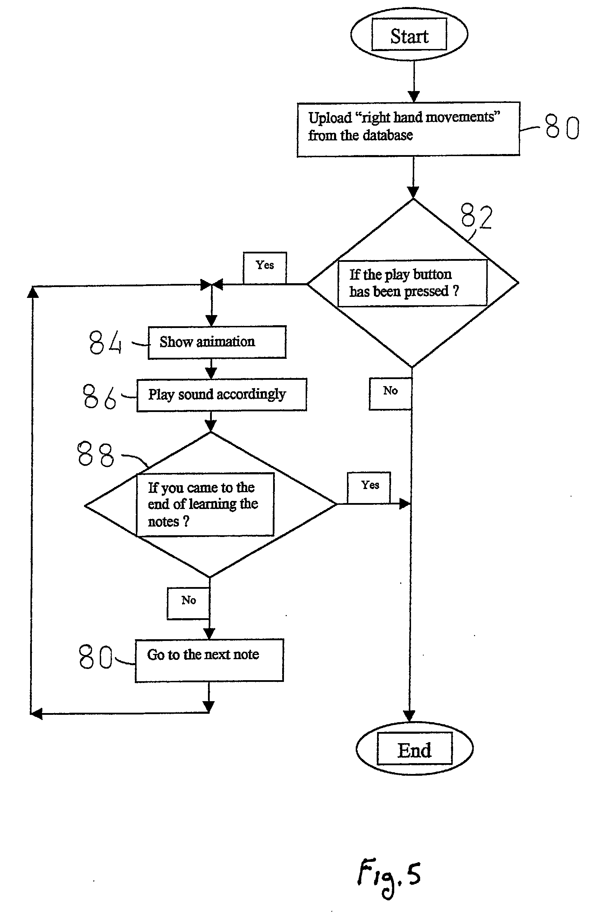

Fig. 5 is a flow chart of a computer program indicating schematically the steps in the lesson according to Fig. 4. First, the computer loads or accesses the data for the right hand lessons (block 80) from a disk, hard drive, or other memory medium. If a right hand lesson has been selected (block 82), the animation associated with the lesson is displayed (block 84), and the appropriate audio tone represented by each note is played (block 86). The computer now checks whether this was the last note to be played (block 88). If so, this is the end of the lesson program. If not, the next note is taught (block 90) and played, as above.

When the student feels ready to learn to play with the left hand, he moves to the lessons for left hand. Depending upon the particular instrument being taught, the lessons for left hand can include various chords which most often appear in songs at the student's level, or can include learning individual notes, as for the right hand.

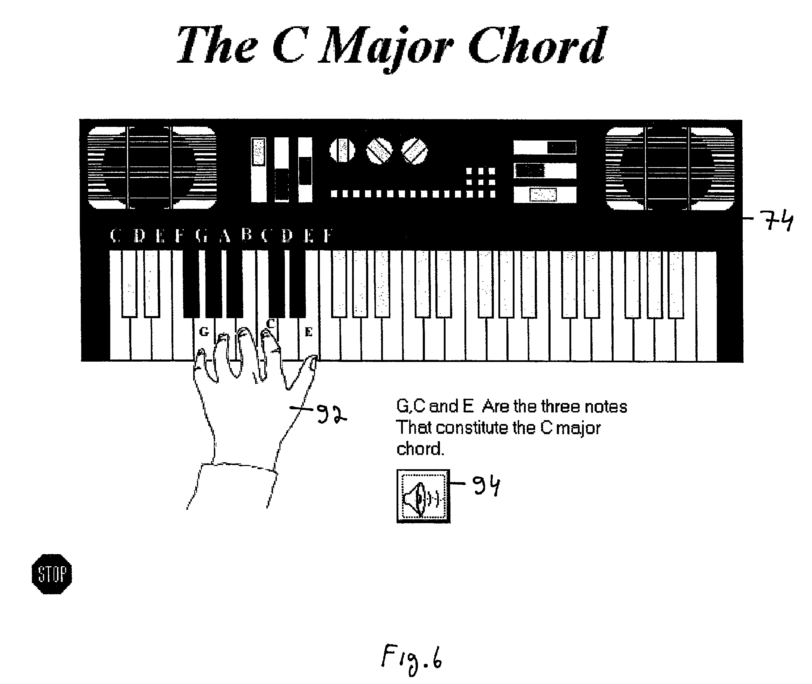

Fig. 6 is an example of a lesson for left hand on an electric organ, according to one embodiment of the present invention, here illustrated as playing a chord. As in Fig. 4, the instrument 74, here shown as an electric organ, is illustrated, together with animation of a hand 92 placed in the proper location and position for playing the notes to be learned in that lesson. The illustrated lesson is the C major chord, showing the proper fingering for playing the three notes of the chord, namely, Sol Do Mi. A click on a play button 94 will cause the fingers in the animated display to press on the keys, one after another, while the appropriate tone of each note is played by the computer. The student then performs the same finger movements on her instrument, and listens to hear whether the sounds made by her instrument are the same as those played by the computer. It will be appreciated that the student can press the play button 94 as often as he or she wants to or needs to, in order to hear the desired notes and learn how to play them by practicing on his or her instrument. As each left hand lesson is mastered, the student moves to the next lesson in difficulty.

It will be appreciated that the steps involved in displaying and playing lessons for the left hand are substantially identical to those for the right hand described in detail hereinabove.

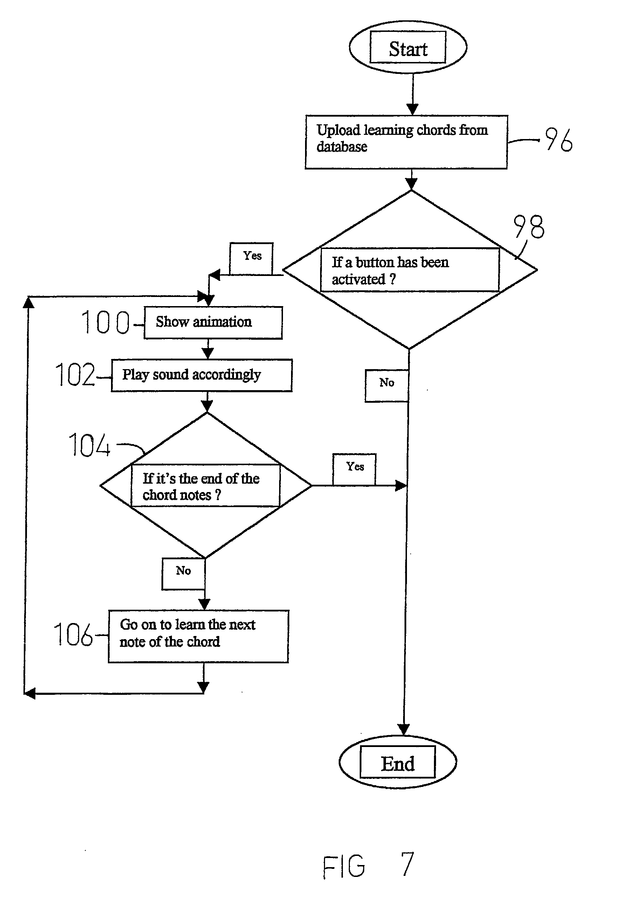

The steps in the lesson according to Fig. 6 are shown schematically in Fig. 7. Briefly, the computer loads or accesses the data for the left hand or chord lessons (block 96) from the memory medium. If a left hand lesson has been selected (block 98), the animation associated with the lesson is displayed (block 100), and the appropriate note or notes are played (block 102). The computer now checks whether this was the last note to be played in this chord or lesson (block 104). If so, this is the end of the lesson program. If not, the next note is taught (block 106) and played, as above.

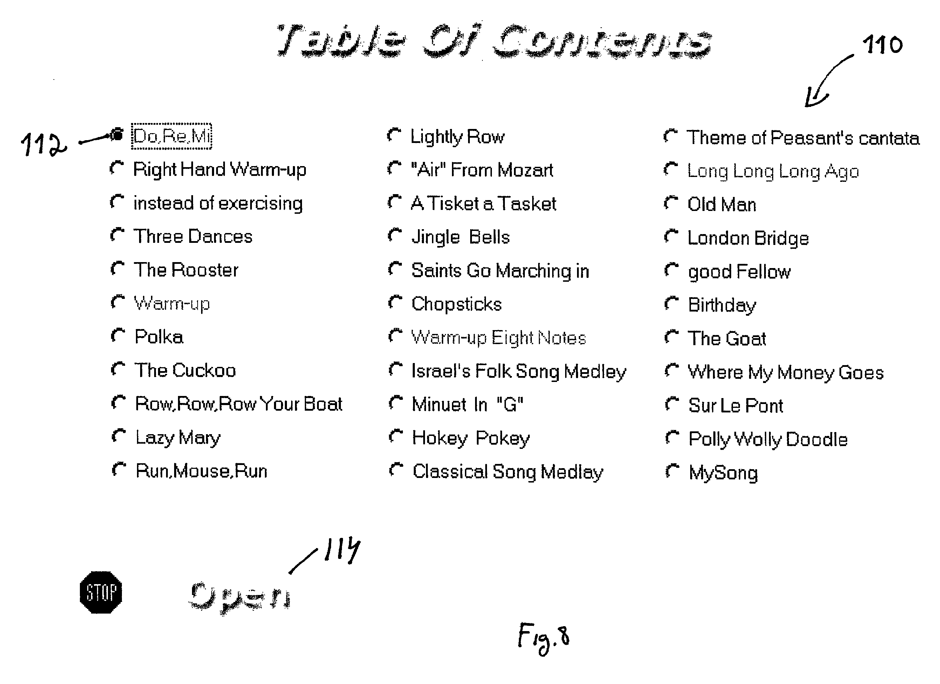

When the student feels confident of skills learned at a certain stage, and/or when he or she prefers to practice on an actual song, the student presses the collection of songs button on the main menu. Pressing this button will open a list box 110 (or Table of Contents) in which all the songs in the program database are arranged. Preferably, the songs are arranged according to their level of difficulty, as shown in Fig. 8, one example of a song playing screen according to one embodiment of the present invention. Thus, the student can easily select one of several songs, which includes only those notes which he or she has already learned in the lessons, on which to practice further. The student highlights the desired song 112 ("Do, Re, Mi", in the illustrated embodiment), as with the mouse or on a touch screen, and presses the Open button 114.

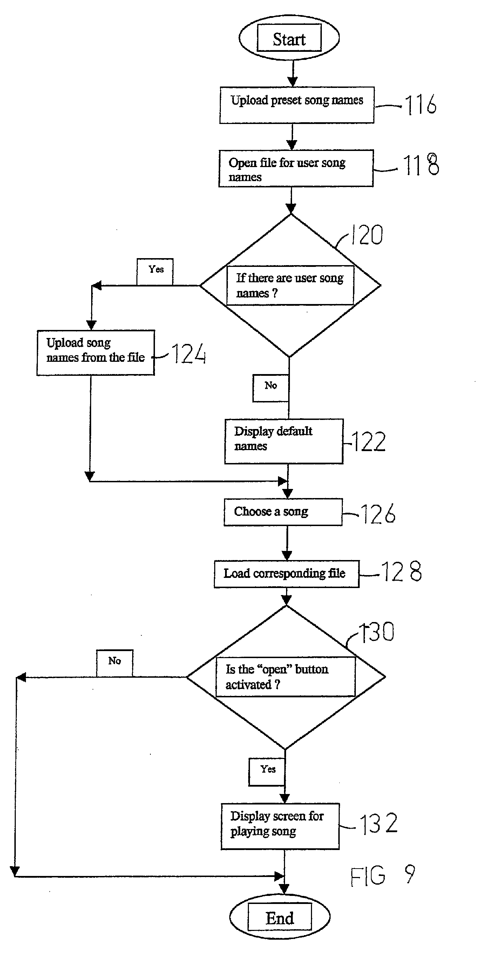

Operation of this song playing screen is shown schematically in Fig. 9, a flow chart for a computer program indicating schematically the steps in playing a selected song, according to one embodiment of the invention. First, the names of the pre-recorded songs are loaded (block 116) from the program into the computer memory, so that songs which are stored in a file on the hard disk or CD-ROM are accessible by the computer. Then the directory called "My Song" is opened by the computer (block 118). The computer checks whether there are any songs in this directory (block 120). If there are no songs in this directory, only the names of the default songs (pre-recorded songs of the correct level of difficulty, depending on the student's progress) are displayed (block 122). If there are any songs in the My Song directory, their names are also loaded (block 124) into the computer memory and displayed on the screen.

When the student selects a song (block 126), the appropriate file of single notes is loaded (block 128) or accessed. If the student selects Open (block 130), the song playing screen is displayed (block 132), and the notes comprising that song are loaded into the computer memory, one after the other, from the notes data base, and are displayed on the screen. Alternatively, the individual notes of each song may be incorporated into the program.

It is a particular feature of the present invention that songs are not recorded in blocks, as in conventional teaching methods, but as individual notes, which can be combined in any desired fashion. If the notes of the song are to be displayed and played as originally written, the computer does so automatically. But if the student or other user wishes to change a song, this can be done by copying the song to My Song (the composition screen) and replacing notes, etc. as desired, which cannot be done at all, when blocks of songs are recorded as complete units.

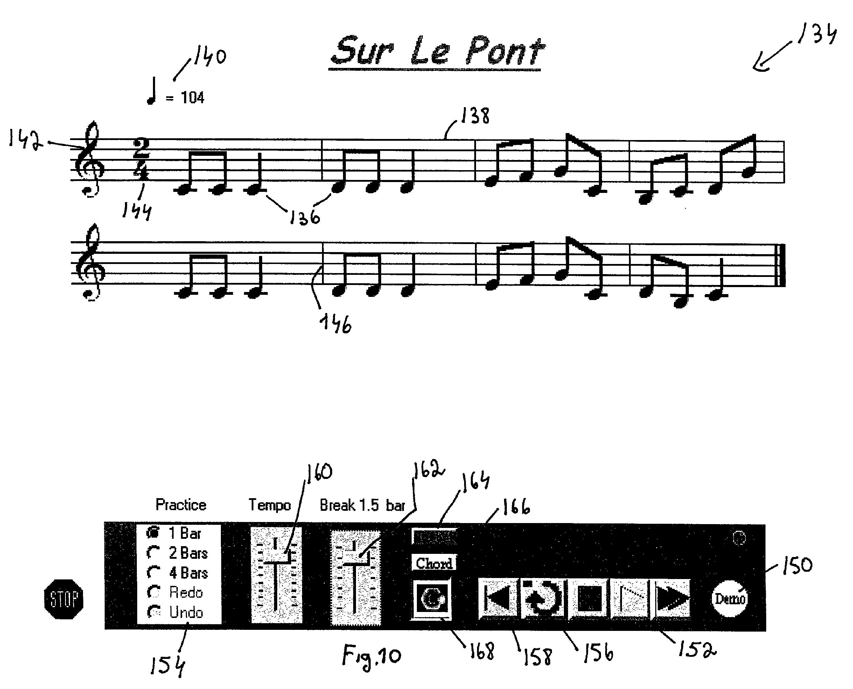

One example of a practice screen 134 according to the invention is shown in Fig. 10. As can be seen, the selected song appears on screen 134 as a plurality of notes 136 arranged on a staff 138. When the student selects a song, the display preferably corresponds to the musical elements as they are loaded. Thus, first the staff, clef, time and key signatures will be displayed, then each note will be displayed in sequence in its appropriate location on the staff. An indicator 140 of the tempo at which the song is to be played is provided above the staff at the start of the song. Preferably, the indication is represented as the speed of a metronome. In addition, the key signature 142, time signature 144, and bar lines 146 are all inserted in the correct order on the staff 138. Once the notes of the song have been displayed on the screen, the student can select which passages he or she wishes to practice and at what tempo.

If the student wishes to hear the entire song, from start to finish, the Demo button 150 is pressed. The demo can be stopped and restarted as desired by pressing the demo button again. If the student wishes to practice, he selects a Practice Mode 154. In this case, the student must select the length of the passage in the song to be practiced at a given time, such as, for example, 1 bar, 2 bars, 4 bars, one half of a period, or an entire period. In the illustrated example, the 1 bar practice mode has been selected, so the computer will play one bar at a time with a pause in between bars to permit the student to play the bar himself on his own instrument.

It is a particular feature of the present invention that the computer can automatically divide the simple songs of the practice sessions into periods. It has been found that for most simple songs, four bars (counted until the fourth bar line is reached) is a musical sentence or period. For songs which include a pick-up at the start of the song, the appropriate algorithm for finding a period is four bar lines plus 1 note. Using these algorithms, the computer is able to determine a period and a half period, when these options are selected by the student from the practice screen.

The program of the present invention is arranged to operate in one of two modes: automatic and manual. In the manual mode, in order to hear the computer dynamically play the passage, the student presses the Play button 152. The program is arranged, in response to the selection by the student, to automatically play the tones of the passage selected If the student wishes to repeat a certain passage, he can do so by pressing the Repeat button 156. Alternatively, if he or she wishes to return to the beginning of the song, it is necessary merely to press the Back to Start button 158.

If the student wishes to change the suggested tempo, this can be done by sliding the tempo indicator 160 towards faster or slower, or to a selected, desired tempo. This change will be indicated automatically in the tempo indicator 140. As stated above, the tempo indicator can be moved as by clicking with the mouse, touching on a touch screen, or in any other suitable fashion.

In the automatic practice mode, the computer automatically, dynamically plays the various passages from the piece, one after the other, with a period of silence between subsequent passages. The length of the silence is selected so as to permit enough time for the student, himself, to play the studied passage. It is also possible to change the break time between playing of passages of a piece. A default break time of 1.5 times the length of the passage is provided. Thus, the computer will play the selected passage, pause 1.5 times the amount of time required to play that passage, then play the next passage. This break time can be altered by the student by sliding the break time indicator 162 to define a shorter or longer break. Thus, the student can select the amount of time required for him or her to practice playing a given passage of a song.

The default to be illustrated and played, as shown in Fig. 10, is the treble clef (right hand only). An indicator 164 is provided to indicate to the student what is being displayed and practiced. Once the student has learned the melody, it is possible to insert chords. In this case, the student selects the chord button 166. Now, both indicators will be lit up, treble and chord. Alternatively, the student may wish to practice the chords separately. In this case, only the chord button will be illuminated and only the chords will be illustrated and played. As soon as chord is selected, the letter names of the chords appear above the staff (not shown), and the chord is played dynamically by the computer, either together with the melody or separately, depending upon whether one button or two have been selected. It is a particular feature of the invention that, since each note is stored as a data string, it is possible to insert a chord with each note, if desired.

The present invention permits the student to select whether the computer will automatically proceed from one selected portion to the next or not. A mode selector button 168 is provided for this purpose. In the automatic mode, the computer plays a portion of the selected length (here illustrated as 1 bar), pauses for 1.5 bars to permit the student to play back that bar, then automatically plays the next bar, and so forth. In the manual mode, on the other hand, the computer plays a portion only when the play button 152 is pressed. It then pauses until the play button is pressed again.

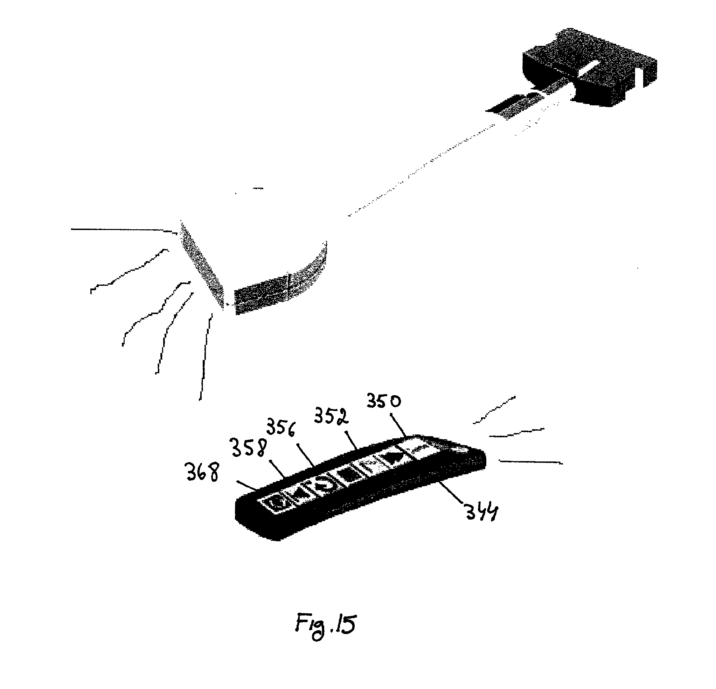

According to an alternative embodiment of the invention, illustrated in Fig. 15, a remote control system is provided, in addition to the buttons on the screen. Thus, an IR receiver 340 is coupled to the computer, such as by means of a connector 342 to a COM outlet of the computer. Preferably, IR receiver 340 includes a 270° angle of transmission. A remote controller 344, including a remote IR transmitter (not shown) is provided, which can sit in any desired location, such as adjacent the musical instrument. Alternatively, the remote controller 344 can be held and operated by a teacher or lecturer working with one or more students. Thus, this embodiment of the invention permits playing of a song, while the notes appear on a staff in front of the students, such as for choir practice, or in any other setting. Preferably, remote controller 344 includes all the essential buttons which are shown on the screen during song practice. For example, in the illustrated embodiment, remote controller 344 includes a Demo button 350, a Play button 352, a Repeat button 356, a Return to the beginning button 358, and a selector button 368 for automatic practice. These buttons cause the computer to perform the same functions as the corresponding buttons 150, 152, 156, 158, and 168 on the screen, thus permitting practice of a song without requiring the user to approach the computer in order to move the mouse. In particular, a student can practice a song by reaching buttons on the remote control with one finger, without having to move the entire hand away from the instrument.

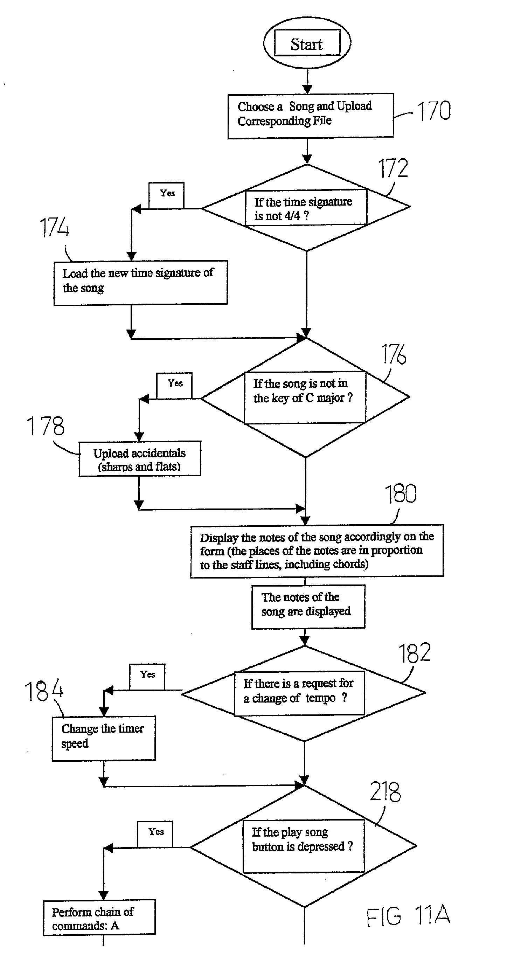

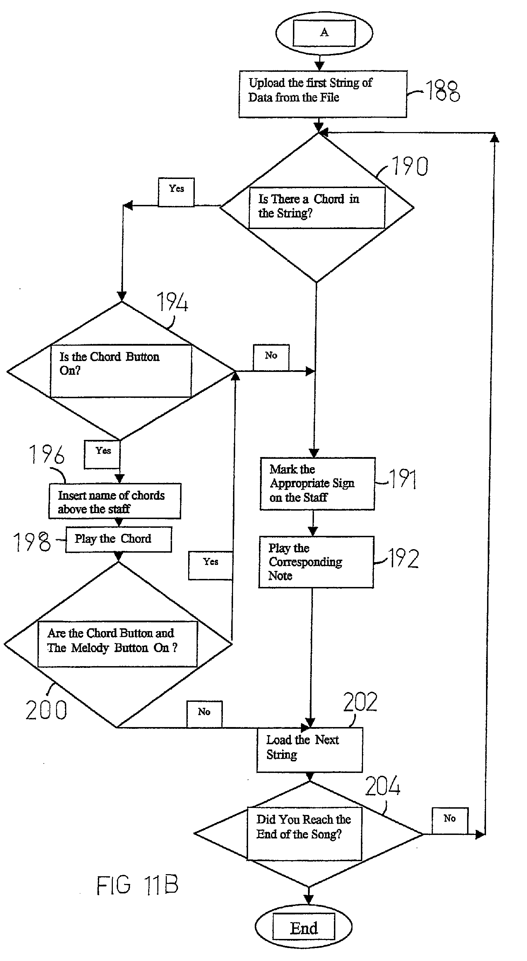

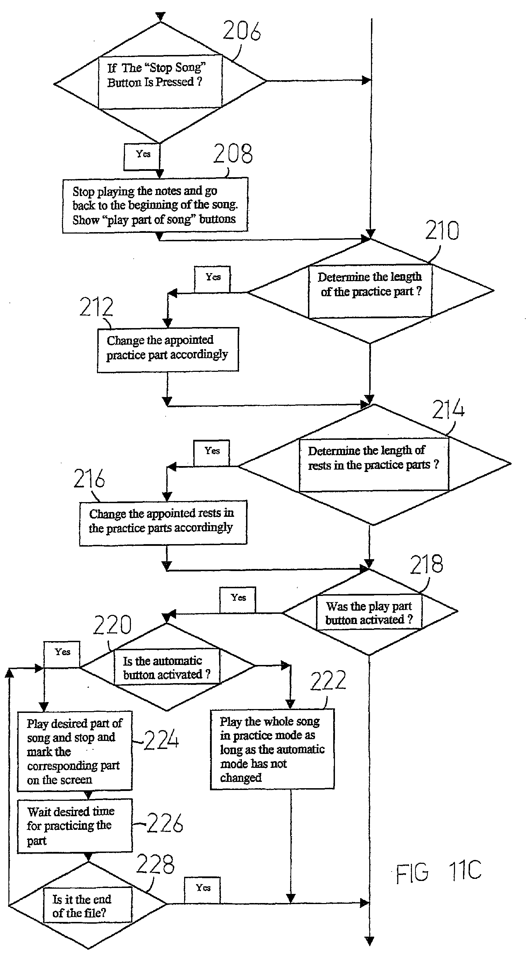

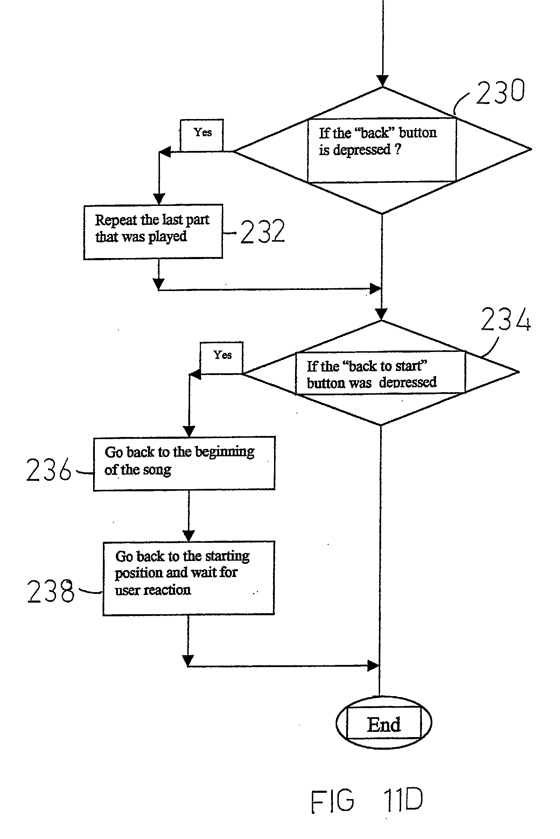

Operation of the program for practicing a selected song, according to one embodiment of the invention, is indicated schematically in Fig. 11. When a song is selected, the appropriate file is loaded (block 170). The default time signature is 4/4. If the time signature of the selected song is different (block 172), then the time signature of the selected song is loaded (block 174). The default key is C major. If the key of the selected song is different (block 176), then the key signature of the selected song is loaded (block 178).

Once the correct time signature and key signature are illustrated on the staff, the notes of the song are placed, one after the other, on the staff (block 180). If the chord button has been pressed, the letter name of the chord is placed on the staff above each appropriate note. Before playing, the computer checks whether there is a request to change the tempo (block 182). If so, a timer in the computer is adjusted (block 184) so as to change the tempo at which the notes are played, accordingly. If the Demo button is pressed (block 186), the appropriate data string representing the first note is loaded from the file (block 188 in Fig. 11/2). The computer checks whether there is a chord in the string (block 190). If not, the appropriate note on the staff is highlighted (block 191) and only the note in the treble is played (block 192).

If there is a chord in the string (block 190), the computer checks whether the chord button is pressed (block 194). If so, the appropriate letter name of the chord is inserted and highlighted above the staff (block 196) and the chord is played by the computer (block 198). If both the treble and the chord buttons are pressed (block 200), then the computer also plays the appropriate note from the melody (block 192). Once the string has been played, the next string (representing the next note) is loaded (block 202). If this is the end of the song (block 204), then the song is displayed until the student inputs another command. If this is not the end of the song, the next string is examined to determine whether it includes a chord (block 190) and play continues as described above.

If the stop button (e.g., Demo button during play) is pressed (block 206), the computer stops playing and displays the buttons for playing a passage of a song (block 208). The computer determines which length of passage has been selected (block 210). If the selected passage is not the default, which is generally a single bar, the length of the selected passage is changed according to the selection by the student (block 212). The computer then determines the length of the pause selected by the student (block 214). If the selected pause length is not the default length, the length of the break is changed according to the selection by the student (block 216).

Now the computer looks to see whether the Play button has been selected (block 218). If so, it looks to see whether the student has selected automatic play or manual play (block 220). If automatic play is selected, the computer now plays the entire song in the practice mode, one selected number of bars at a time, separated by pauses of the selected length (block 222). If automatic play is not selected, the computer plays one selected length passage of notes and highlights that passage on the screen (block 224). It then pauses until the student again presses the play button (block 226). This continues until the end of the song is reached (block 228).

If the Play button was not pressed, the computer determines whether the Repeat button was selected (block 230, Fig. 11/4). If so, the last played passage of the song will be repeated (block 232). If not, the computer determines whether the Return to Start button was selected (block 234). If so, the computer returns to the start of the song (block 236) and returns to the top of the menu, awaiting instructions from the student (block 238).

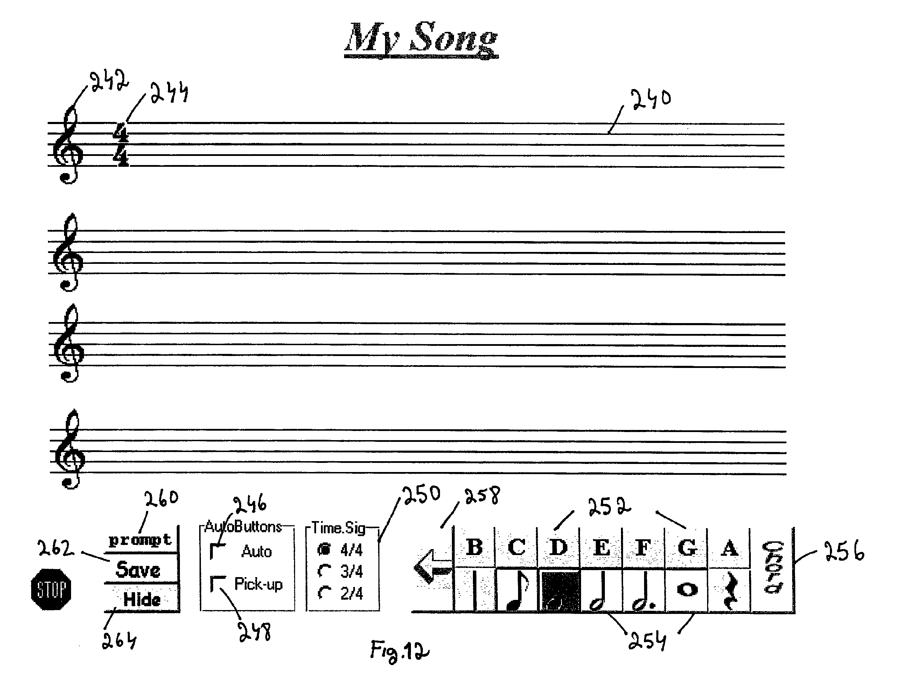

At any stage during the learning process, the student can decide to compose a song of his or her own, for both learning and practicing with the computer teacher, and for his or her enjoyment. Fig. 12 is an example of a song composition screen, according to one embodiment of the present invention. As can be seen, a blank staff 240 is provided with a default treble clef 242 and 4/4 time signature 244. A plurality of options are provided for the composer at the bottom of the screen. Provision is made for automatic insertion of bar lines during composition. Thus, selecting Auto at reference 246 causes the program to automatically count the notes in each bar and to insert bar lines at the appropriate point. Should the composer insert too many notes by accident, a visible indication will be provided on the screen.

If the composer wishes to add a pick-up, the pick-up indicator 248 is selected. In this way, the program automatically inserts a bar line on the staff after the notes of the pick-up.

If the composer wishes to use a time signature other than the default 4/4, he or she can select a different time signature 250, which will then appear on the staff and be utilized by the automatic bar line program to introduce bar lines at the appropriate point.

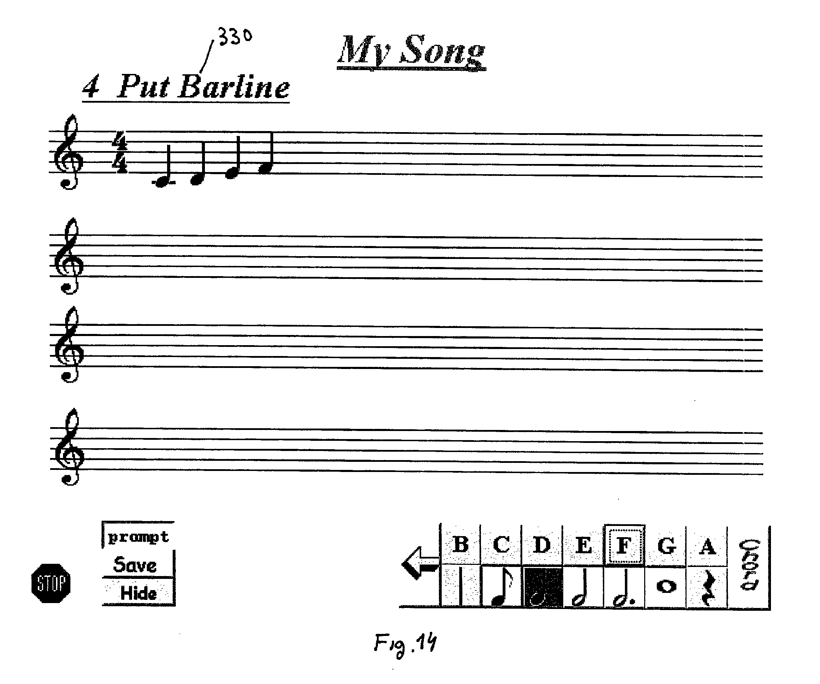

It is a particular feature of the present invention that the notes are individually stored and arranged on the staff. Thus, the composer selects the name of the note (i.e., A, B, C, etc) 252 and the length of the note (i.e., quarter note, half note, whole note, rest) 254 (such as, by clicking on them with a mouse or touching the selections on a touch screen), and the computer program automatically displays the note of the selected length in the appropriate location on the staff, as shown in Fig. 14. When the composer wishes to enter a chord, he selects the chord button 256 and the letter name of the chord, and it will be inserted above the staff above the last note added. In order to delete an entry, a backspace 258 is provided which erases the last entry.

For beginning composers, a prompt button 260 is provided. When prompt is selected, the program provides instructions to the composer as to the present status of the song (e.g., "3 beats", to indicate that notes having the length of 3 beats have been placed on the staff, or steps which must be taken, such as inserting a bar line, correcting the length or length of a note, etc. A save button 262 is provided to save the composed song for later practice. A hide button 264 permits the student to hide the composition screen, temporarily.

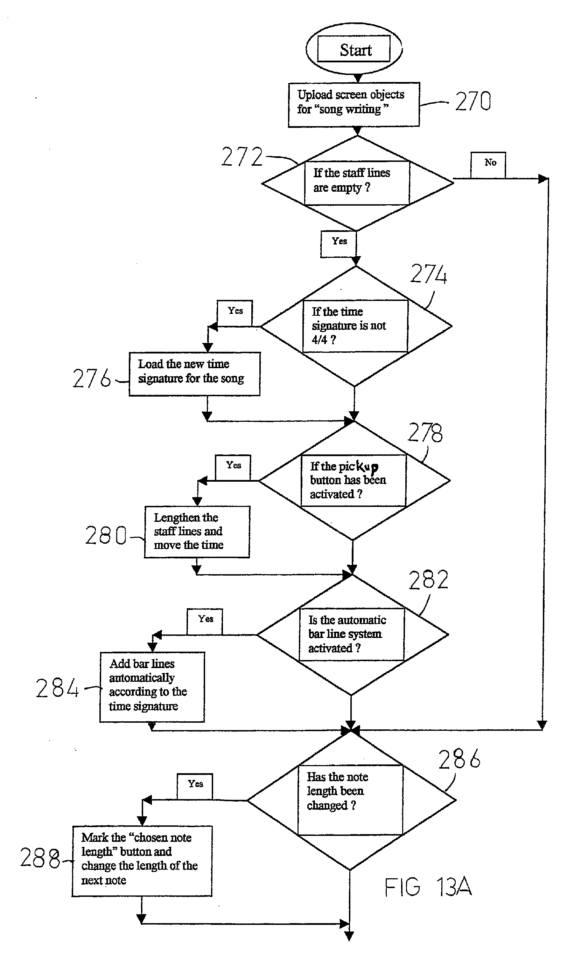

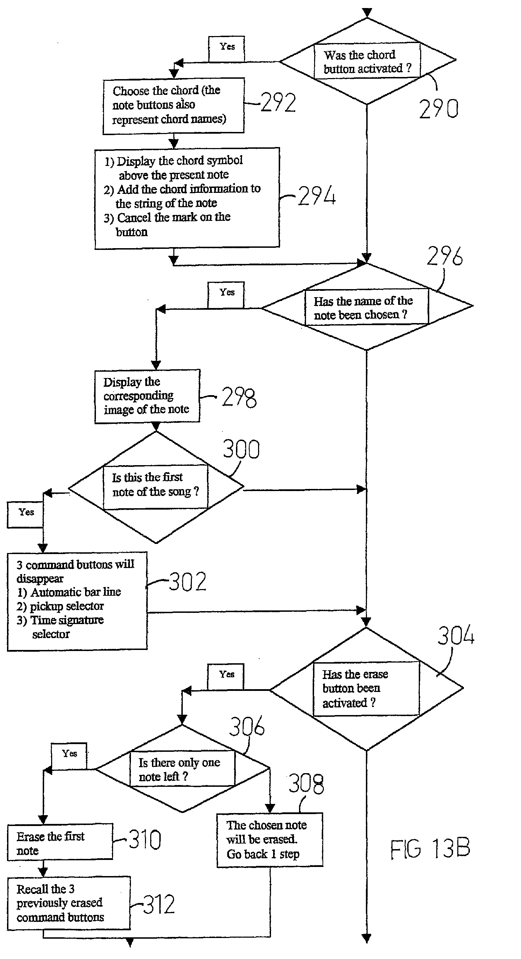

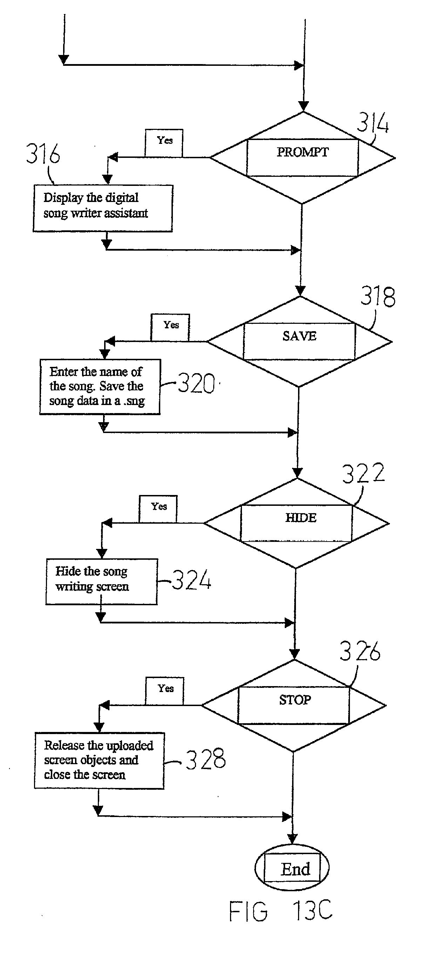

Fig. 13 is a flow chart of a computer program indicating schematically the steps in song composition, according to one embodiment of the invention. First, the musical elements used for composing a song are loaded (block 270). The computer determines whether the staff is empty (i.e., whether a new song is to be composed, or whether an old song is to be edited) (block 272). If the staff is empty, the computer determines whether the time signature is to be changed from 4/4 (block 274). If yes, the selected time signature is loaded (block 276). Next, the computer determines whether a pick-up has been added (block 278). If so, the relative placement of the time signature is moved, so as to provide room for the pickup (block 280). The computer then determines whether bar lines are to be added automatically (block 282). If so, the program calculates when bar lines are to be added, in accordance with the selected time signature (block 284).

Next, the computer determines whether the note selected has the default length, i.e., a quarter note (block 286). If not, the selected length is highlighted on the screen, and the default length is temporarily reset to the selected length (block 288). If the chord button has been selected (block 290, Fig. 13/2), the selected type of chord is determined (the name of the chord)(block 292). The appropriate chord name is displayed above the staff, the chord data is added to the data string of the associated note, and the chord button is no longer highlighted (block 294).

The composer now selects the note (block 296) by pressing on the name of the note, such as with the mouse, on a touch screen, or on the computer keyboard. The computer graphically displays the selected note in the appropriate location on the staff (block 298). If this is the first note of the song (block 300), three option buttons disappear from the composition screen: automatic bar line, pick-up button, and time signature selector (block 302), as these can no longer be changed for the remainder of that song.

If the erase button was selected (block 304), the computer determines whether at least one note remains on the staff (block 306). If so, the note to be erased is deleted, and the screen display is refreshed one step earlier (block 308). If the note to be erased is the only note on the staff (block 310), then all the option buttons appear again on the screen (block 312).

The computer determines whether the Prompt button has been selected (block 314, Fig. 13/3). If so, the digital helper for composing songs is displayed in a help field on the screen (block 316). If the save button is selected (block 318), the name of the song is typed by the student using the computer keyboard, and the song data (the collection of data strings) is saved in an appropriate file, such as a .sng-type file or other music storage file (block 320). If the hide button is selected (block 322), the song composition page is hidden (not displayed) (block 324). If the stop button is selected (block 326), the screen is closed (erased) (block 328) and the main menu is displayed.

Fig. 14 is an example of a song composition screen with part of a song composed thereon, and including the digital helper commands 330 generated by the prompt command.

It is a particular feature of the present invention that the composed songs are created and can be stored as a series of data strings. Each note is represented by a data string, as described above. Thus, the songs can be stored in a memory medium for playing by the computer, they can be taught during the practice learning sessions according to the invention, they can be printed out for playing by the student, and can even be sent over communications lines or on diskette to a friend, who can also learn to play the song with the method of the present invention.

It will be appreciated that, when teaching other instruments, the graphic illustrations and animations are suited to the instrument, as are the lessons for the left and right hands.

The systems of the present invention have a number of advantages over conventional piano teaching and composition programs. First, these are learn by yourself programs, so a private teacher is not necessary. Thus, the cost of learning is substantially lower than that of private lessons. Second, the student learns at his or her own pace, and determines the length of time required to acquire various skills. Since the lessons are computerized, it is possible to return, again and again, to a particular passage or measure which is difficult for the student or which he or she wishes to practice. Learning a second instrument is relatively easy, since the basic theory is the same, and only the finger placement on the instrument must be learned again.

Since the program is very user friendly, it can be operated by virtually anyone, regardless of age or computer knowledge or skill. At the same time, the program provides a visual example or illustration of hands playing each lesson while hearing the appropriate music. Further, it permits a beginning student to compose his or her own song and to use that song in later lessons, so that the student is actually taught how to play a song he or she has composed.

According to one embodiment of the invention, various portions of a piece of music being played can be highlighted during playing by the computer. In this way, the student can see and hear, at the same time, the notes written on the staff and the way they ought to be played. It is a particular feature of the invention that the student can select which portions are to be highlighted at any given time, i.e., one bar at a time, two bars, a musical phrase and a musical sentence, etc. This also serves to improve his or her understanding of the structure of the musical piece.

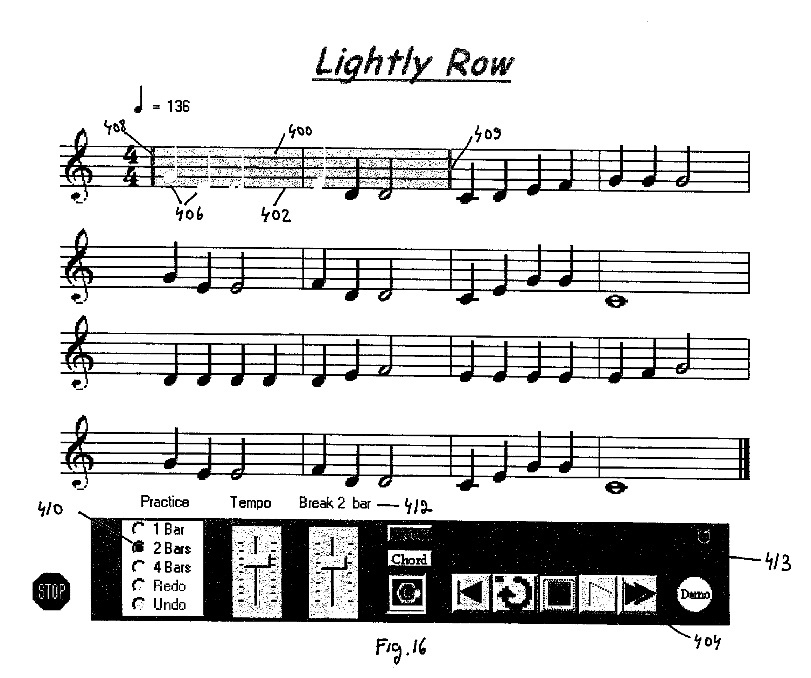

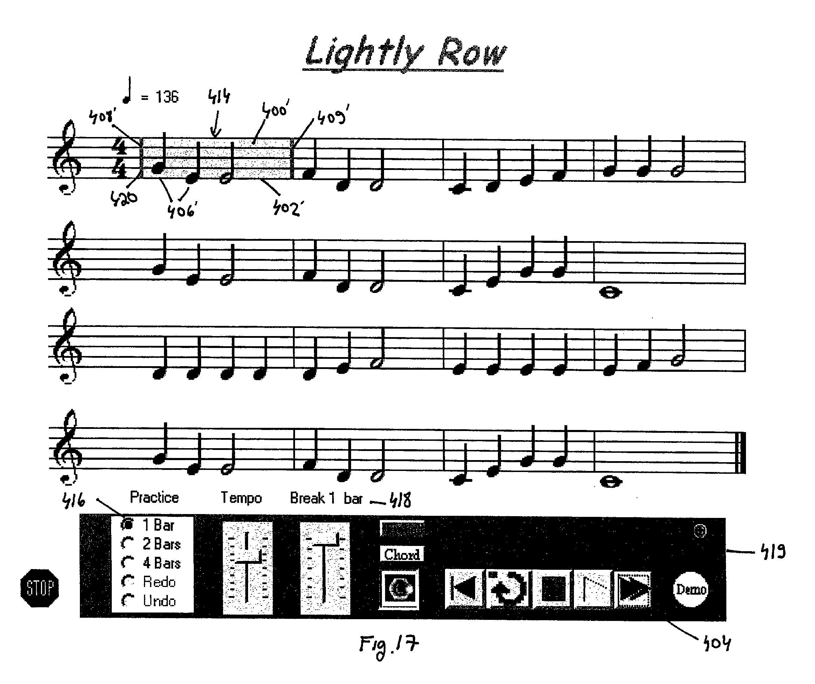

Referring now to Figs.16 and 17, there are shown two examples of practice screens with highlighting 400, 400' of a portion of the staff 402, 402', according to the present invention. Highlighting can be actuated in any desired fashion, preferably by a selectable key. In these embodiments, highlighting is actuated by pressing a double arrow key 404. As can be seen, the entire selected portion of the staff is painted with a selected highlighting color. According to one embodiment of the invention, shown in Fig. 16, the individual notes 406 are also colored, but with a contrasting color relative to the highlighting According to an alternative embodiment, shown in Fig. 17, the individual notes 406' remain black. In addition, the beginning 408, 408' and end 409, 409' of the selected portion may be marked, as with a red line. This serves to more clearly define the selected portion.

In the embodiment illustrated in Fig. 16, the student has selected the practice mode of 2 bars at a time, as can be seen in the Practice indication 410 and the two bar break 412 in the ruler 413. When the student begins the practice session, the first two bars are highlighted, and the notes are colored, as they are played. If the student presses repeat, the same highlighting remains, and the notes are sounded again. Otherwise, the first two bars return to their original coloring, and the next two bars are highlighted, with colored notes, while they are played, and so on, until the end of the piece.

Alternatively, the student may prefer to practice one bar at a time, as shown in Fig. 17. Here it can be seen that one bar 414 has been selected, by noting the Practice indication 416 and the Break of one bar 418 in the ruler 419. Here, too, the practice unit (one bar) is bounded as by red bar lines 420.

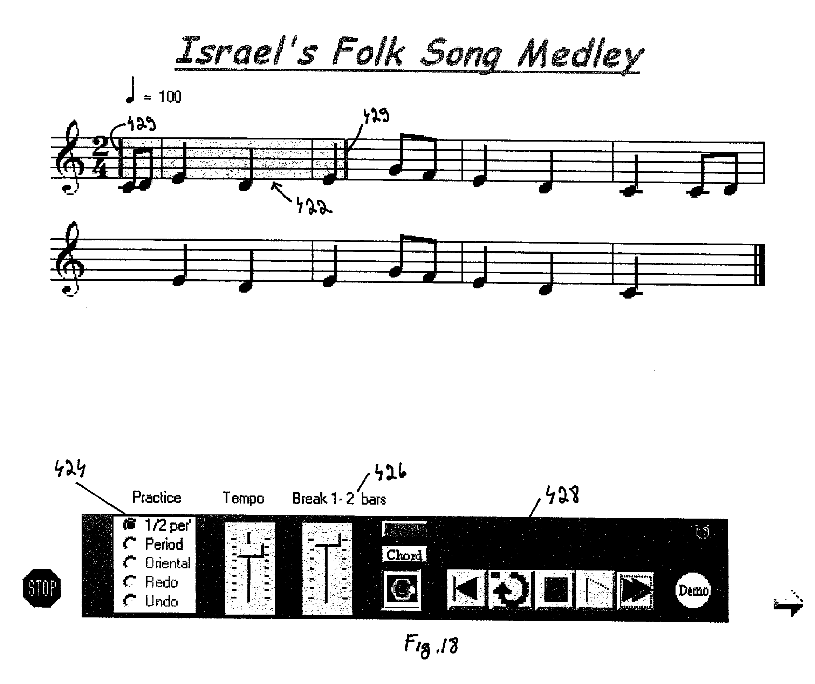

Yet another alternative is to practice a period or one half period at a time, the latter as shown in Fig. 18. Here it can be seen that one half period 422 (in this case, one bar and two halves) has been selected. This selection will be noted in the Practice indication 424 and the Break indicator 426 in the ruler 428. Here, too, the practice unit is bounded as by red bar lines 429.

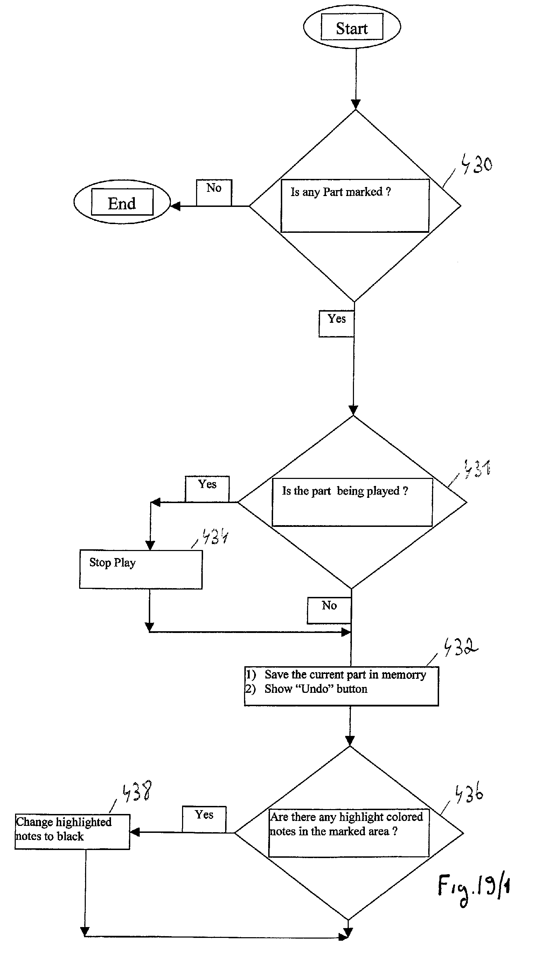

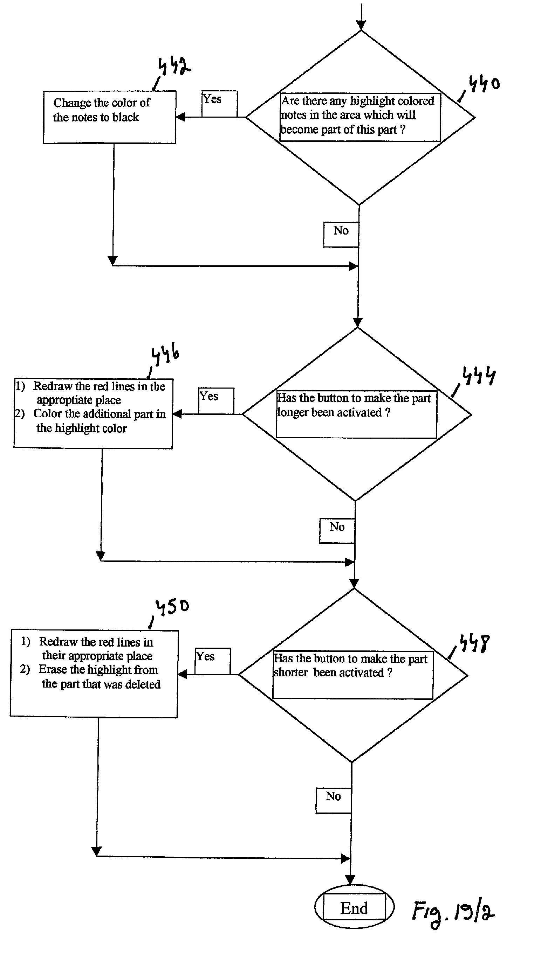

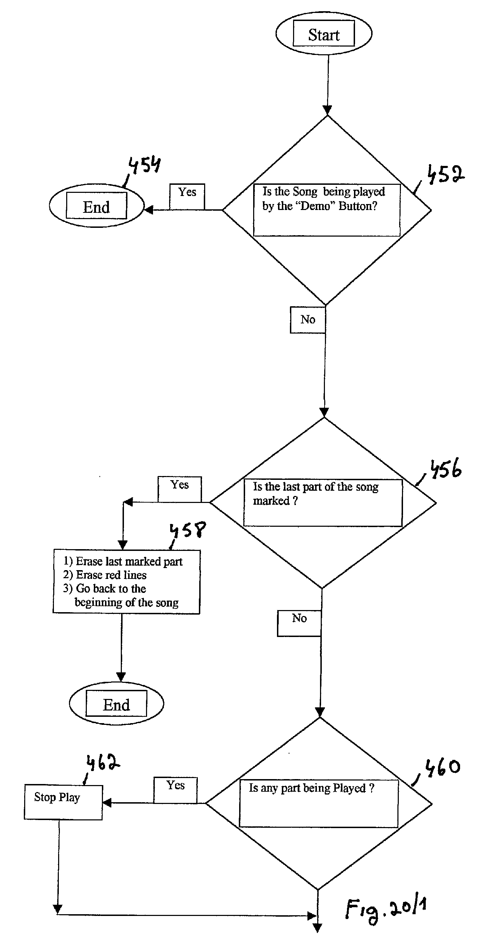

Referring now to Fig. 19, there is shown a flow chart indicating schematically the steps in highlighting during a practice session, according to one embodiment of the invention. At the start of the operation, the computer checks whether a portion is highlighted (block 430). If not, this routine ends. If yes, the computer checks whether the portion is being played(block 431). If not, a picture of the state of the portion is saved in memory (block 432)and activates the "undo" button.. If yes , the computer stops playing the portion (block 434), and then saves a picture of the state of the portion in memory and activates the "undo" button. (block 432)

The computer now determines whether there colored notes in the highlighted portion (block 436). If so, the note color is changed to black (block 438). When there are no colored notes, the computer determines whether there are any colored notes in bars which will join the present portion (block 440). If so, the color of these notes is changed to black (block 442). If not, the computer determines whether the button which enlarges the selected portion has been pushed (block 444).

If the student has pressed the button to change the length of the selected portion, two things happen (block 446): 1) the red lines delineating the selected portion are re-drawn in the new location; and 2) the additional portion of the portion is colored with the highlighting color. For example, suppose the student originally indicated a practice session of 1 bar at a time, as shown in Fig. 17. The selected portion is indicated by red bar lines at the beginning and end of the bar being played, and the staff and notes are colored in the selected highlighting colors. If the student changes his or her mind and wishes to practice two bars at a time, he or she presses the relevant button, as shown in Fig. 16, and the red bar lines are erased and redrawn at the beginning of the first bar and the end of the second bar. Similarly, the additional bar is colored with the same highlighting colors as the first bar.

The computer then determines whether the button which reduces the selected portion has been pushed (block 448). If so, two things happen (block 450): 1) the red lines delineating the selected portion are re-drawn in the new location; and 2) the deleted portion of the portion is redrawn in black and white, without the highlighting colors.

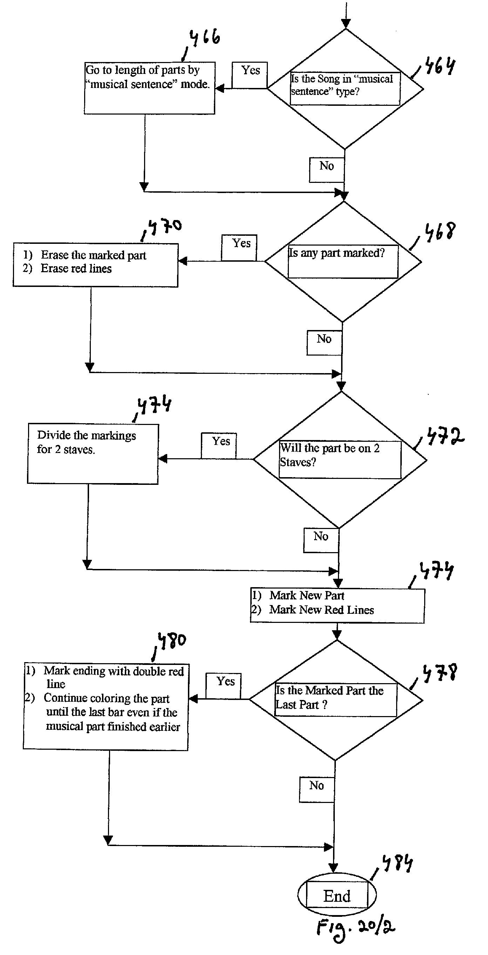

Fig. 20 is a flow chart indicating schematically the steps involved in the operation of highlighting on the screen, according to one embodiment of the invention. At the start, the computer determines whether the song is being played in the "Demo" mode (block 452). If so, that is the end of this routine (block 454). If not, the computer determines whether the last portion of the song is highlighted (block 456). If so, several things occur: 1) all the highlighting colors are erased; 2) the red lines indicating the start and end of the portion are erased; and the display returns to the beginning of the song, and the routine ends (block 458).

If the last portion of the song is not being played, the computer determines whether any portion is being played (block 460) and, if so, stops playing (block 462). Once no portion is being played, the computer determines whether the song is to be played in complete musical sentence (block 464) If so, it begins the routine for determining the length of each portion according to musical phrases (block 466).

The computer then determines whether any portion is highlighted (block 468). If so, the highlighting of the portion is erased and the red lines indicating the beginning and end of the portion are also erased (block 470). Next, the computer determines whether the portion spreads over two staves (block 472). If so, the highlighting is also split over two staves (block 474). Next, the next portion to be played is highlighted. The red markings are inserted at the beginning and end of the portion (block 476).

The computer now determines whether the highlighted portion is the last portion of the song (block 478). If so, the red line indicating the end of the portion is a double line, indicating the end of the piece (block 480). At the same time, highlighting of the segment continues to the end of the piece, even if the musical phrase ends before that (block 482). Once this is done, or if the highlighted portion is not the last portion of the song, this routine ends (block 484).

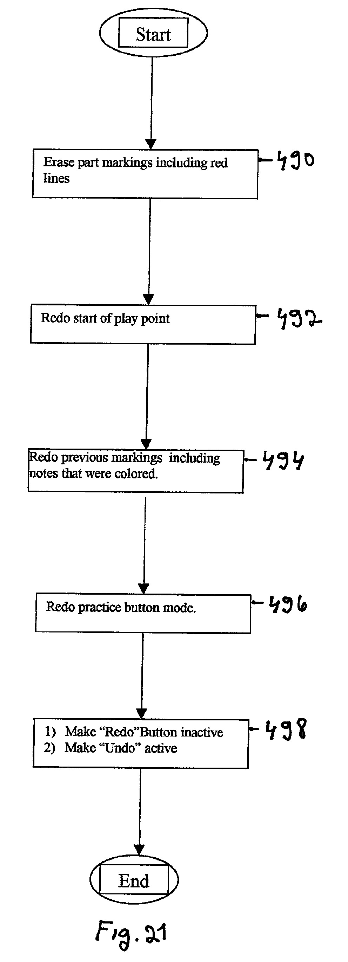

Fig. 21 is a flow chart indicating schematically the steps relating to highlighting in case of Redo, according to one embodiment of the invention, which is used when the student wishes to return to the following portion. (exactly as it was highlighted) after undoing (described below). Redo begins by erasing the highlighting of the portion, including the red lines (block 490). Next, the starting point of play is reconstructed on the screen (block 492). The highlighting of the previous portion is reconstructed, including coloring the notes which were played (block 494). The state of the practice buttons also is reconstructed (block 496). Finally, the Redo button is de-activated, while the Undo button is activated (block 498).

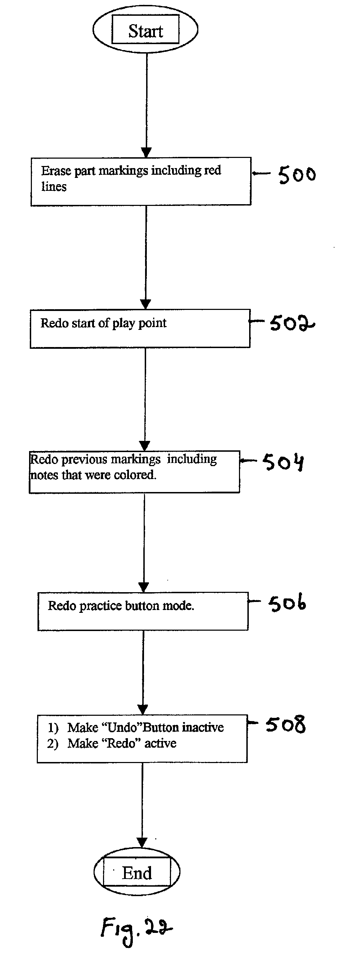

Fig. 22 is a flow chart indicating schematically the steps relating to highlighting in case of Undo, according to one embodiment of the invention, which is used when the student wishes to cancel the highlighting of the last displayed portion and return to the previouse highlighted portion, exactly as it is. Undo begins by erasing the highlighting of the portion, including the red lines (block 500). Next, the starting point of play is reconstructed on the screen (block 502). The highlighting of the previous portion is reconstructed, including coloring the notes which were played (block 504). The state of the practice buttons also is reconstructed (block 506). Finally, the Undo button is de-activated, while the Redo button is activated (block 508).

It will be appreciated that the invention is not limited to what has been described hereinabove merely by way of example. Rather, the invention is limited solely by the claims which follow.

## Claims

1. A system for learning playing of a musical instrument without a teacher, the system comprising:
a series of lessons stored in a computer program;
each lesson being programmed to include:
automatic dynamic playing of at least one learning passage by a computer; and a period of silence of a predefined length relative to said learning passage, for playing of said learning passage by a student on a musical instrument,
said system further containing a remote control unit for inputting user commands.

2. A method for learning playing of a musical instrument without a teacher, the method comprising:
causing a computer to dynamically play at least one learning passage; and causing said computer to stop playing, for a predefined length of time relative to said learning passage, for the playing of said learning passage by a student on the musical instrument,
wherein the steps of causing include inputting user commands by means of a remote unit.

3. A system for learning playing of a musical instrument without a teacher, the system comprising:
a series of lessons stored in a computer program,
each lesson being programmed to include:
automatic dynamic playing of at least one learning passage by a computer, and a period of silence or a predefined length relative to said learning passage, for playing of said learning passage by a student on a musical instrument.

4. The system according to claim 3, wherein each said lesson includes a plurality of parameters, and said system includes means for selectively changing each of said parameters by the student.

5. The system according to claim 3, wherein each learning passage includes a series of tones arranged in a pre-selected order.

6. The system according to claim 3, further comprising:
a composition portion including means for activating, by means of a button, at least one composition command to compose a song.

7. The system according to claim 3, further comprising a help field for displaying one of: a current beat number in a bar of a song being composed; or an instruction to insert a bar line.

8. The system according to claim 3, further comprising a help field for displaying error messages in calculating number of beats.

9. The system according to claim 3, wherein said musical instrument is independent of said computer.

10. The system according to claim 3, further comprising a display of at least one of the following parameters in a practice screen:
a) number of bars in said learning passage;
b) tempo of said dynamic playing;
c) length of said break portion;
d) automatic or manual play;
e) chord play;
f) melody play; and
means for selectively changing at least one of said parameters by the student.

11. The system according to claim 3, further comprising a display of at least one of the following options in a practice screen:
a) a demo of a complete song formed of a plurality of said learning passages;
b) a practice mode selector for dividing a song into at least two learning passages of pre-selected length for automatic dynamic playing by said computer; and
c) return to start.

12. The system according to claim 3, wherein said learning passage includes a series of graphic notes and associated audio tones, each note being stored in the computer as a data string.

13. A method for learning playing of a musical instrument
without a teacher, the method comprising:
causing a computer to dynamically play at least one learning passage; and causing said computer to stop playing, for a predefined length of time relative to said learning passage, for playing of said learning passage by a student on the musical instrument.

14. A system for composing music on a computer, the system comprising means for activating in a computer, by means of a button, at least one composition command to compose a song.

15. The system according to claim 14, further comprising:
seven buttons displayed on a computer display, each button representing a different basic note;
means for selecting at least one of said buttons by said student; and
means for causing said computer to display the note represented by said selected button on a staff, so as to compose a song.

16. The system according to claim 14, further comprising a help field for displaying one of: a current beat number in a bar of a song being composed; or an instruction to insert a bar line.

17. The system according to claim 14, further comprising a help field for displaying error messages in calculating number of beats.

18. The system according to claim 14, further comprising a printer for printing a composed song.

19. A method for composing music on a computer, the method comprising:
activating, by means of a button, at least one composition command in a computer to compose a song.

20. The system according to claim 1 further comprising display means for displaying highlighting of said learning passage.

21. The method according to claim 13 wherein the student dynamically plays said instrument and further comprising highlighting said learning passage during said dynamic playing.
